# EUROPEAN PATENT APPLICATION

(11) **EP 4 806 966 A1**
(43) Date of publication of application: **16.09.2026**
(21) Application number: 25162807.9
(22) Date of filing: 11.03.2025
(51) Int. Cl.: C09J 5/06, B32B 7/12, B32B 27/36, B32B 27/32

(54) **THERMALLY DEBONDABLE PLASTIC STRUCTURE AND METHOD FOR DEBONDING IT**

(71) Applicant: Henkel AG & Co. KGaA, 40589 Düsseldorf (DE)
(72) Inventor: Migliore, Nicola, 40227 Düsseldorf (DE); Franken, Uwe, 41542 Dormagen (DE)

(57) **Abstract**

The present invention relates to a bonded plastic structure for use in mobility and e-mobility related components, and a method of deboning the bonded plastic structure by applying induction heating.
The bonded structure comprising:
a first plastic substrate;
a second plastic substrate;
a thermally debondable adhesive composition layer comprising thermally expandable thermoplastic microspheres;
a structural adhesive layer; and
an induction sensitive layer,
wherein the thermally debondable adhesive composition is disposed on a surface of the first plastic substrate and/or on a surface of the second plastic substrate and wherein the induction sensitive layer is placed on top of the thermally debondable adhesive composition layer.

## Description

### Technical field

The present invention relates to a thermally debondable bonded plastic structure, which is particularly suitable for use in mobility and e-mobility related components.

### Background of the invention

Adhesive bonds and polymeric coatings are commonly used in the assembly and finishing of manufactured goods. They are used in place of mechanical fasteners, such as screws, bolts and rivets, to provide bonds with reduced machining costs and greater adaptability in the manufacturing process. Adhesive bonds distribute stresses evenly, reduce the possibility of fatigue and seal the joints from corrosive species.

Whilst adhesive bonds thus offer many advantages over mechanical fasteners, it tends to be difficult to disassemble adhesively bonded objects where this is required in practical applications. The removal of the adhesive through mechanical processes - such as by sand blasting or by wire brushing - is often precluded, in part because the adhesive is disposed between substrates and is thus either inaccessible or difficult to abrade without corrupting the substrate surfaces. Disassembly through the application of chemicals and / or high temperature might be effective but can be time consuming and complex to perform: moreover, the aggressive chemicals and/or harsh conditions required can damage the substrates being separated, rendering them unsuitable for subsequent applications.

As an exemplary case, it is evidently desirable to remove, replace and / or recycle components of automotive industry, such as car and electric car head lamps, which have been attached within the devices using adhesives. However, such adhesives are typically strong in that they are designed to maintain adhesion both during drop or impact events and across a wide range of operating temperatures and other environmental conditions. If care is not taken, adhesive-bonded device components can therefore be damaged or destroyed when removing the components through mechanical processes or the application of chemicals.

Certain authors have sought to develop debondable adhesive compositions wherein the applied heat is used to disrupt the bonding at the interface of the adhesive and the substrate. The problem with the thermal debonding is that if a care is not taken, high temperatures may damage the substrates.

Certain authors have tried using a laser as heating source. However, this solution requires substrates that are transparent to the laser in order to not absorb the radiation, resulting in an inefficient option for several types of plastic.

Noting these problems, certain authors have also sought to develop debondable adhesive compositions, wherein the passage of an electrical current through the cured compositions acts to disrupt the bonding at the interface of the adhesive and the substrate.

There is a demand to increase the amount of plastic coming from recycled materials, specifically from electric vehicles, and to increase the circular design of the vehicle itself. Therefore, there is a need to provide solutions designed to facilitate easy dismantling and/or repair of vehicle parts comprising bonded plastic structures, such as headlamps, tailgates, bumpers, and spoilers.

### Summary of the invention

The present invention relates to a bonded structure comprising: a first plastic substrate; a second plastic substrate; a thermally debondable adhesive composition layer comprising thermally expandable thermoplastic microspheres; a structural adhesive layer; and an induction sensitive layer, wherein the thermally debondable adhesive composition is disposed on a surface of the first plastic substrate and/or on a surface of the second plastic substrate and wherein the induction sensitive layer is placed on top of the thermally debondable adhesive composition layer.

The present invention also relates to a method of debonding the bonded structure according to the present invention, the method comprising the steps of: i) applying an induction heating; and, ii) debonding the surfaces.

The present invention encompasses use of the bonded structure according to the present invention in vehicle parts.

Short description of the figures
Figure 1 illustrates the structure of the bonded structure according to the present invention and debonding process.
Figure 2 illustrates Tensile Lap Shear Strength before and after debonding on PP/PC bonded structures and before and after debonding using induction heating.
Figure 3 illustrates PP/PC bonded structures before and after debonding using induction heating.

### Detailed description of the invention

As used herein, the singular forms *"a", "an"* and *"the"* include plural referents unless the context clearly dictates otherwise.

The terms *"comprising", "comprises"* and *"comprised* of" as used herein are synonymous with *"including", "includes", "containing"* or *"contains",* and are inclusive or open-ended and do not exclude additional, non-recited members, elements or method steps.

As used herein, the term *"consisting of'* excludes any element, ingredient, member or method step not specified.

When amounts, concentrations, dimensions and other parameters are expressed in the form of a range, a preferable range, an upper limit value, a lower limit value or preferable upper and limit values, it should be understood that any ranges obtainable by combining any upper limit or preferable value with any lower limit or preferable value are also specifically disclosed, irrespective of whether the obtained ranges are clearly mentioned in the context.

Further, in accordance with standard understanding, a weight range represented as being *"from 0 to* x" specifically includes 0 wt.%: the ingredient defined by the range may be absent from the composition or may be present in the composition in an amount up to x wt.%.

The recitation of numerical end points includes all numbers and fractions subsumed within the respective ranges, as well as the recited end points.

All percentages, parts, proportions and then like mentioned herein are based on weight unless otherwise indicated.

When an amount, a concentration or other values or parameters is/are expressed in form of a range, a preferable range, or a preferable upper limit value and a preferable lower limit value, it should be understood as that any ranges obtained by combining any upper limit or preferable value with any lower limit or preferable value are specifically disclosed, without considering whether the obtained ranges are clearly mentioned in the context.

The words *"preferred", "preferably", "desirably"* and *"particularly"* are used frequently herein to refer to embodiments of the disclosure that may afford particular benefits, under certain circumstances. However, the recitation of one or more preferable, preferred, desirable or particular embodiments does not imply that other embodiments are not useful and is not intended to exclude those other embodiments from the scope of the disclosure.

As used throughout this application, the word *"may"* is used in a permissive sense - that is meaning to have the potential to - rather than in the mandatory sense.

As used herein, room temperature is 23°C plus or minus 2°C. As used herein, *"ambient conditions"* means the temperature and pressure of the surroundings in which the composition is located or in which a coating layer or the substrate of the coating layer is located.

*"Two-part (2K) compositions"* in the context of the present invention are understood to be compositions in which a first part (A) and a second part (B) must be stored in separate vessels because of their (high) reactivity. The two parts are mixed only shortly before application and then react, typically without additional activation, with bond formation and thereby formation of a polymeric network. Herein higher temperatures may be applied in order to accelerate the cross-linking reaction.

As used herein, the term *"one component (1K) composition"* refers to a composition where, during storage of the composition, the composition components are all admixed together but the properties of the composition, including viscosity, remain consistent enough over the time of storage to permit successful utility of the composition at a later time.

All references cited in the present specification are hereby incorporated by reference in their entirety.

As used herein the term "PSA" means pressure sensitive adhesive.

As used herein the term *"debondable"* means that, after curing of the adhesive, the bond strength can be weakened by at least 50% upon application of temperature of from 60 to 200 °C for a duration of from 7 seconds to 60 minutes. Bond strength is measured by Tensile Lap Shear (TLS) test performed at room temperature and based upon EN 1465:2009 (German version) Based on Adhesives - Determination of tensile lap-shear strength of bonded assemblies.

As used herein, the term *"monomer"* refers to a substance that can undergo a polymerization reaction to contribute constitutional units to the chemical structure of a polymer. The term *"monofunctional",* as used herein, refers to the possession of one polymerizable moiety. The term *"polyfunctional",* as used herein, refers to the possession of more than one polymerizable moiety.

As used herein, *"(meth)acryl"* is a shorthand term referring to *"acryl"* and/or *"methacryl'.* Thus the term *"(meth)acrylamide"* refers collectively to acrylamide and methacrylamide.

As used herein, the term *"epoxide"* denotes a compound characterized by the presence of at least one cyclic ether group, namely one wherein an ether oxygen atom is attached to two adjacent carbon atoms thereby forming a cyclic structure. The term is intended to encompass monoepoxide compounds, polyepoxide compounds (having two or more epoxide groups) and epoxide terminated prepolymers. The term *"monoepoxide compound"* is meant to denote epoxide compounds having one epoxy group. The term *"polyepoxide compound"* is meant to denote epoxide compounds having at least two epoxy groups. The term *"diepoxide compound"* is meant to denote epoxide compounds having two epoxy groups.

The epoxide resin may be unsubstituted but may also be inertly substituted. Exemplary inert substituents include chlorine, bromine, fluorine and phenyl.

The term *"equivalent weight"* as used herein refers to the molecular weight divided by the number of a function concerned. As such, *"epoxy equivalent weight"* (EEW) means the weight of resin, in grams, that contains one equivalent of epoxy.

The molecular weights referred to in this specification can be measured with gel permeation chromatography (GPC) using polystyrene calibration standards, such as is done according to ASTM 3536.

Unless otherwise defined, all terms used in disclosing the invention, including technical and scientific terms, have the meaning as commonly understood by one of the ordinary skilled in the art to which this invention belongs to. By means of further guidance, term definitions are included to better appreciate the teaching of the present invention.

The present invention relates to a bonded structure comprising: a first plastic substrate; a second plastic substrate; a thermally debondable adhesive composition layer comprising thermally expandable thermoplastic microspheres; a structural adhesive layer; and an induction sensitive layer, wherein the thermally debondable adhesive composition is disposed on a surface of the first plastic substrate and/or on a surface of the second plastic substrate and wherein the induction sensitive layer is placed on top of the thermally debondable adhesive composition layer.

In a preferred embodiment the thermally debondable adhesive composition is disposed on a surface of the first plastic substrate and wherein the induction sensitive layer is placed on top of the thermally debondable adhesive composition layer.

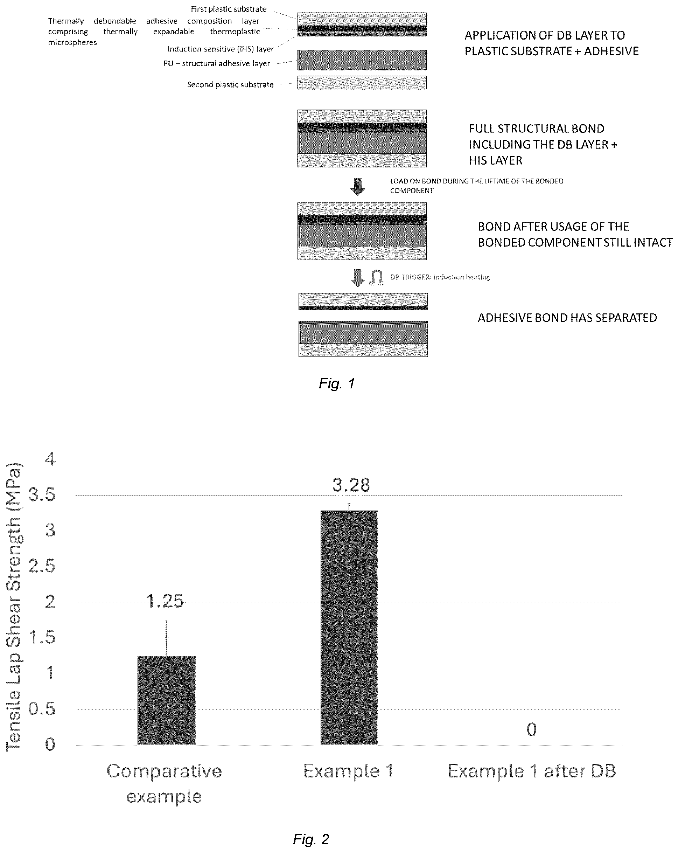

The bonded structure according to the present invention is illustrated in figure 1.

The bonded structure according to the present invention may be in vehicle parts such as headlamps, tailgates, bumpers, and spoilers.

The bonded structure according to the present invention comprises a first plastic substrate. The first plastic substrate may be the same or different than the second plastic substrate and may be independently selected from the group consisting of polypropylene (PP), polycarbonate (PC), acrylonitrile butadiene styrene, mixture of polycarbonate and acrylonitrile butadiene styrene, polypropylene with glass fibre, polyamide, polypropylene with talc, and mixtures thereof, preferably the first plastic substrate is polypropylene.

The bonded structure according to the present invention comprises a second plastic substrate. The second plastic substrate may be same or different than the first plastic substrate and may be independently selected from the group consisting of polypropylene (PP), polycarbonate (PC), acrylonitrile butadiene styrene, mixture of polycarbonate and acrylonitrile butadiene styrene, polypropylene with glass fibre, polyamide, polypropylene with talc, and mixtures thereof, preferably the second plastic substrate is polycarbonate.

Polycarbonate is preferred due its chemical and physical properties.

The first plastic substrate and/or the second plastic substrate may be pre-treated. Plastic substrates have apolar structure having relatively poor adhesion properties, and therefore, pretreatment is preferred. Pre-treatment of the plastic substrates may improve the adhesion properties.

Flaming and plasma treatments are commonly used pre-treatments. In addition, iPrOH pre-treatment is used to remove any grease from the surface of the substrate.

The first plastic substrate and the second plastic substrate may have the same or different pre-treatment or no pre-treatment.

The bonded structure according to the present invention comprises a thermally debondable adhesive composition layer comprising thermally expandable thermoplastic microspheres.

Suitable thermally debondable adhesive composition layer comprising thermally expandable thermoplastic microspheres for use in the present invention may be selected from the group consisting of water based acrylic primer composition comprising thermally expandable thermoplastic microspheres, one component polyurea adhesive composition comprising thermally expandable thermoplastic microspheres, one component epoxy adhesive composition comprising thermally expandable thermoplastic microspheres, two component epoxy adhesive composition comprising thermally expandable thermoplastic microspheres, one component polyurethane adhesive composition comprising thermally expandable thermoplastic microspheres, hotmelt adhesive composition comprising thermally expandable thermoplastic microspheres, and mixtures thereof.

The above mentioned thermally debondable adhesives comprising thermally expandable thermoplastic microsphere have a good adhesion on pretreated plastic substrate.

The above mentioned thermally debondable adhesive compositions increase the overall strength of the joined assembly. This is clearly illustrated in the example section, wherein the adhesion strength of the commercial structural adhesive in a bonded structure is noticeably increased when used in combination with thermally debondable adhesive composition layer and induction sensitive layer.

In one embodiment, the thermally debondable adhesives composition layer is formed from a water based acrylic primer composition comprising thermally expandable thermoplastic microspheres. Preferably water based acrylic primer composition comprises a) an acrylate resin; b) water; c) thermally expandable thermoplastic microspheres; and d) a coalescing solvent.

In one embodiment, the thermally debondable adhesives composition layer is formed from a thermally debondable two-component epoxy adhesive composition comprising thermally expandable thermoplastic microspheres. The two-component epoxy adhesive preferably comprises a first part comprising an epoxy resin; a reactive diluent; a plasticiser; and thermally expandable thermoplastic microspheres; and a second part comprising two or more curing agents consisting of at least one compound possessing at least two epoxide reactive groups per molecule; an accelerator; and, a catalyst, wherein the first part and the second part are mixed in a weight ratio of from 1.4 to 1.9.

In one embodiment, the thermally debondable adhesives composition layer is formed from a thermally debondable two-component polyurethane adhesive composition comprising thermally expandable thermoplastic microspheres. The two-component polyurethane adhesive composition preferably comprises a first part comprising two or more polymeric polyols having an average hydroxyl functionality from at least 1.8, wherein the average hydroxyl functionality is measured in accordance with ASTM D4274; and thermally expandable thermoplastic microspheres; and a second part comprising at least one isocyanate-terminated compound; wherein the first part and the second part are mixed in an OH/NCO equivalent ratio of from 1:0.7 to 1:1.1.

In one embodiment, the thermally debondable adhesives composition layer is formed from a thermally debondable one-component polyurea adhesive composition comprising thermally expandable thermoplastic microspheres. The one-component polyurea adhesive composition preferably comprises a) dimeric toluene 2,4-diisocyanate; b) a first amine; c) a second amine; d) a curing agent; and e) thermally expandable thermoplastic microspheres.

In one embodiment, the thermally debondable adhesives composition layer is formed from an one component (1K) epoxy composition comprising thermally expandable thermoplastic microspheres. The one component epoxy adhesive composition preferably comprises: a) thermally-expandable thermoplastic microspheres; b) at least one epoxide compound; c) at least one compound which provides at least two amine hydrogens reactive toward epoxide groups; and, d) at least one accelerator; wherein the composition is characterized by a molar ratio of epoxide-reactive groups to epoxide groups from 0.6:1 to 1.2:1, preferably from 0.95: 1 to 1.1:1.

The thermally debondable adhesive composition layer comprises thermally expandable thermoplastic microspheres.

The thermally expandable thermoplastic microspheres may have a core-shell structure, wherein the shell may be formed from cross-linked polymer and the core may be composed of a blowing agent.

Suitable cross-linked polymer may be prepared by (co)polymerization of any suitable monomers or comonomers. Suitable monomer that can be used for preparing the polymer includes non-ionic ethylenically unsaturated monomers.

Suitable non-ionic ethylenically unsaturated monomers for use in the present invention can be selected from the group consisting of styrene, vinyltoluene, ethylene, butadiene, vinyl acetate, vinyl chloride, vinylidene chloride, acrylonitrile, acrylamide, methacrylamide, C1-C20 alkyl or C2-C20 alkenyl esters of acrylic or methacrylic acid, methacrylate, methyl methacrylate, ethyl acrylate, ethyl methacrylate, butyl acrylate, butyl methacrylate, 2-ethylhexyl acrylate, 2-ethylhexyl methacrylate, benzyl acrylate, benzyl methacrylate, lauryl acrylate, lauryl methacrylate, oleyl acrylate, oleyl methacrylate, palmityl acrylate, palmityl methacrylate, stearyl acrylate, stearyl methacrylate, hydroxyl-containing monomers, in particular C1-C10 hydroxyalkyl (meth)acrylates, such as hydroxyethyl (meth)acrylate, hydroxypropyl (meth)acrylate, glycidyl (meth)acrylate, preferably methyl methacrylate and mixtures thereof.

Suitable polymer may also be a copolymer prepared by the copolymerization of two or more monomers listed above. Preferred monomer combinations include acrylonitrile/methyl (meth)acrylate, styrene/methyl (meth)acrylate, acrylamide/methyl (meth)acrylate, acrylonitrile/hydroxyethyl (meth)acrylate. More preferably combination is acrylonitrile/methyl methacrylate.

Suitable crosslinking agents for use in the present invention for the crosslinking of the polymer are compounds having two or more ethylenically unsaturated groups, for example diacrylates or dimethacrylates of at least dihydric saturated alcohols, e.g., ethylene glycol diacrylate, ethylene glycol dimethacrylate, 1,2-propylene glycol diacrylate, 1,2-propylene glycol dimethacrylate, 1,4-butanediol diacrylate, 1,4-butanediol dimethacrylate, hexanediol diacrylate, hexanediol dimethacrylate, neopentylglycol diacrylate, neopentylglycol dimethacrylate, 3-methylpentanediol diacrylate and 3-methylpentanediol dimethacrylate.

A further class of crosslinkers comprises diacrylates or dimethacrylates of polyethylene glycols or polypropylene glycols having molecular weights of 200 to 9000 in each case. Polyethylene and/or polypropylene glycols used for preparing the diacrylates or dimethacrylates preferably have a molecular weight of 400 to 2000 each.

Not only the homopolymers of ethylene oxide and/or propylene oxide can be used, but also block copolymers of ethylene oxide and propylene oxide, or random copolymers of ethylene oxide and propylene oxide, which comprise a random distribution of the ethylene oxide and propylene oxide units.

Similarly, the oligomers of ethylene oxide and/or propylene oxide are useful for preparing the crosslinkers, examples being diethylene glycol diacrylate, diethylene glycol dimethacrylate, triethylene glycol diacrylate, triethylene glycol dimethacrylate, tetraethylene glycol diacrylate and/or tetraethylene glycol dimethacrylate.

Crosslinkers are preferably used in amounts of 0.1 to 30 wt%, based on the monomers to be polymerized in any one stage.

The core is preferably composed of physical blowing agent. Suitable physical blowing agent includes alkanes and/or cycloalkanes with at least 4 carbon atoms, dialkyl ethers, esters, ketones, acetals, fluoroalkanes with 1 to 8 carbon atoms, and tetraalkylsilanes with 1 to 3 carbon atoms in the alkyl chain, in particular tetramethylsilane.

Examples of suitable blowing agents usable according to the invention, propane, n-butane, iso- and cyclobutane, n-, iso- and cyclopentane, cyclohexane, dimethyl ether, methyl ethyl ether, methyl butyl ether, methyl formate and acetone may be mentioned, and also fluoroalkanes which can be degraded in the troposphere and thus are harmless to the ozone layer, such as trifluoromethane, difluoromethane, 1,1,1,3,3-pentafluorobutane, 1,1,1,3,3-pentafluoropropane, 1,1,1,2-tetrafluoroethane, difluoroethane and 1,1,1,2,3,3,3-heptafluoropropane, and perfluoroalkanes such as CsFs, C₄F₁₀, C₅F₁₂, CeFi4 and C₇F₁₆. The blowing agents can be used alone or in any combination with one another.

Further, hydrofluoro olefins, such as 1,3,3,3-tetrafluoropropene, or hydrochlorofluoro olefins, such as 1-chloro-3,3,3-trifluoropropene, can be used as blowing agents.

In a preferred embodiment, the physical blowing agents are hydrocarbons, preferably, selected from the group consisting of alkanes and/or cycloalkanes with at least 4 carbon atoms. In particular, pentanes, preferably isopentane and cyclopentane, are used. With the use of the rigid foams as insulation in cooling appliances, cyclopentane is preferred. The hydrocarbons can be used in mixture with water.

The thermally expandable microspheres can be prepared by seed swelling of the crosslinked polymer and encapsulation of the blowing agents.

The thermally expandable thermoplastic microspheres may have a particle size from 5 to 100 µm, preferably from 8 to 75 µm, preferably from 9 to 50 µm, more preferably from, 10 to 30 µm, more preferably from 12 to 20 µm, and even more preferably from 13 to 19 µm, wherein the particle size is measure by laser diffraction (Low Angle Laser Light Scattering LALLS).

The above-defined particle size ranges are sizes before the expansion.

The thermally expandable thermoplastic microspheres expand when exposed to a heat, preferably exposed to a heat of from 60 to 200°C, preferably from 100 to 180 °C, and more preferably from 130 to 160°C.

The heat source is induction heating.

The thermally expandable thermoplastic microspheres may be present in a primer composition from 8 to 50% by weight of the total weight of the primer composition, and the thermally expandable thermoplastic microspheres may be present in an adhesive composition from 10 to 50% by weight based on the total weight of the adhesive composition, preferably from 20 to 45% and more preferably from 24 to 40%.

The above defined and preferred ranges are ideal to break the bond line while maintaining low solid content in the composition. Quantities less than 8% may not lead to a complete bond break, whereas too high quantities may increase the solid content too high without providing any additional technical benefit.

The bonded structure according to the present invention comprises a structural adhesive layer. The structural adhesive layer forms the load-bearing structure in the bonded structure.

The structural adhesive layer may be formed from an adhesive selected from the group consisting of one component epoxy adhesives, two component epoxy adhesives, acrylic adhesives, one component polyurethane adhesives, two component polyurethane adhesives, cyanoacrylate adhesives, silicone adhesives, polyimide adhesives, silane modified polymers, butyls, hotmelts and mixtures thereof.

Suitable commercially available structural adhesives for use in the present invention include but are not limited to Teroson EP 5065, LOCTITE TLB9150APS, BONDMASTER U632/U152, Loctite UK 2073 / 2173, and Teroson MS 939 from Henkel AG & Co. KGaA.

The bonded structure according to the present invention comprises an induction sensitive layer. The induction sensitive layer enables the debonding of the plastic substrates.

Suitable induction sensitive layer for use in the present invention may be selected from the group consisting of a metal layer, a metal mesh, a metal wire, and mixtures thereof.

Suitable metal used in the induction sensitive layer may be selected from the group consisting of iron, steel, nickel, cobalt, copper, brass, bronze, aluminium and mixtures thereof, preferably the metal is aluminium.

The thickness of the induction sensitive layer may be from 10 to 250 µm, preferably from 20 to 180 µm and more preferably from 30 to 100 µm.

These thicknesses are preferred because too thin induction sensitive layer may not be able to handle the heat without burning, whereas too thick induction sensitive layer may make the bonded structure too rigid.

In a preferred embodiment the induction sensitive layer is a metal layer, preferably induction sensitive layer is aluminium foil.

The present invention relates to use of the bonded structure according to the present invention in vehicle parts.

Non-limiting examples of vehicle parts are headlamps, tailgates, bumpers, spoilers and mixtures thereof.

The present invention also relates to a method of debonding the bonded structure according to the present invention. The debonding method according to the present invention is independent from the type of plastic used in the bonded structure as a first or second plastic substrate.

The method according to the present invention comprises the steps of: i) applying an induction heating; and, ii) debonding the surfaces. The method of debonding is illustrated in figure 1.

Suitable temperature applied in step i) may be from 60 to 200°C, more preferably from 100 to 180 °C, and even more preferably from 130 to 160°C.

There is a significant reduction in bond strength after induction heat activation leading to easy debonding. Further, the substrates are not deformed from the generated heat.

These temperatures are preferred because too high temperatures may damage the plastic substrates, while too low temperatures may not initiate debonding process.

Preferably the induction heating is applied in step i) for a duration of from 7 seconds to 60 minutes.

Required time for debonding depends on the metal used in the induction sensitive layer and the thickness of the layer. For example, aluminium foil having a thickness of 40 µm debonding takes 25 seconds with the following settings: EasyHeat 2.4 kW from Ambrell, equipped with a pancake coil (the power 10.5% and no distance between the pancake and the bonded structure).

The induction heating weakens the bond formed by the thermally debondable adhesive composition layer comprising thermally expandable thermoplastic microspheres leading to debonding the surfaces.

The method of debonding the bonded structure is suitable for any kind of plastics including clear and opaque plastics and adhesive configuration, keeping its the debonding efficiency.

### Examples

Compositions were prepared according to ingredients listed in tables 1 and 2 below.

**Table 1**

| **Part A** | |
|---|---|
| Material | Example 1 (wt.%) |
| Kane Ace MX153 (core shell rubber in Bisphenol-A resin) from Kaneka | 23.48 |
| Dynasylan Gymo (glycidoxypropyltrimethoxysilane) from Evonik | 1.80 |
| Epalloy 8250 (epoxy phenol novolac resin) from Huntsman | 17.61 |
| Printex U powder (carbon black pigment) from Orion | 0.12 |
| Cardanol mono-functional epoxy from Cardolite | 25.60 |
| Expancel 920 DU 80 (thermally expandible microspheres) from Nouryon | 25.83 |
| Rheobyk-7410 ET (solution of a modified urea) from BYK | 0.26 |
| BYK-9076 (alkylammonium salt of a high molecular-weight copolymer) from BYK | 5.30 |

**Table 2**

| **Part B** | |
|---|---|
| Material | Example 1 wt. % |
| Ancamine 2264 (polycycloaliphatic polyamine) from Evonik | 18.31 |
| DEH 1502 (modified polyamide hardener) from Olin | 48.42 |
| Jeffamine T403 (polyetheramine) from Huntsman | 24.29 |
| Pentamine DAH (1,3-bis[3-(dimethylamino) propyl]urea) from Trigin Chemie GmbH | 3.62 |
| Luzenac 2 (talc filler) from Imerys | 4.84 |
| RHEOBYK-7410ET modified urea from BYK | 0.52 |

| | |
|---|---|
| 2K polyurethane adhesive BONDMASTER U632/U152 from Henkel Aluminum foil 40 µm thickness from Alcan Rubber spacer (d= 1.6 mm) from Rocholl isopropanol (iPrOH) form Henkel Poly carbonate PC - Makrolon AL2447 from Rocholl Poly propylene (PP with Finalloy containing 30% talc) from Rocholl Plastic substrates had dimensions 100 mm x 25 mm x 3.0mm | |

### Sample preparation

### Plastic substrate pre-treatment:

The substrates were rubbed with a piece of paper soaked with iPrOH and let dry, finally the substrates were flamed using a flaming machine with a speed of 48 m/min and a flame distance of 6 cm.

The polypropylene substrates were assembled using the following procedure: half of the substrates were coated with the thermally debondable adhesive composition layer comprising thermally expandable thermoplastic microspheres as presented in tables 1 and 2, containing glass beads (100 ± 10 µm). The glass beads were needed in order to guarantee a homogeneous layer between the induction heating sensitive layer and the plastic substrate. The induction sensitive layer, 40 µm Aluminum foil, was applied on top of 2K composition and pressed with a rubber roll to guarantee full adhesion on 2K composition. The full assembly is cured at 60 °C for 2 hours. After curing and measuring the thermally debondable adhesive composition layer thickness, the rubber spacers of 1.6mm were applied on the top of the thermally debondable adhesive composition layer with a distance of 10 mm between each other. This was necessary to provide a bondline of the same thickness. The structural adhesive BONDMASTER U632/U152 was applied in between the rubber spacer with a total bondline area of 2.5 cm x 1 cm using a manual cartridge pusher through a static mixer. A second plastic substrate (PC), not pre-treated as described above, was mounted and faced with the first plastic substrate containing the thermally debondable adhesive composition layer, and after removing the excess adhesive, it was clamped to ensure a good adhesion of the adhesive on the top of the surface. After repeating this procedure for all the substrates, the lap shear substrates were cured according to the TDS of the adhesive used, one week at room temperature.

To prove the efficiency of the proposed multilayer method, tensile lap shear strength measurements were carried out before and after deboning. The first thing that it was noticed it was as the combination of the thermally debondable adhesive composition layer together with the induction sensitive layer strongly improved the overall strength of the joined structure. The proposed multilayer assembly (Example 1) increases more than the double the initial tensile lap shear strength of the same joined structure without the multilayer assembly (Comparative example). This is illustrated in figure 2.

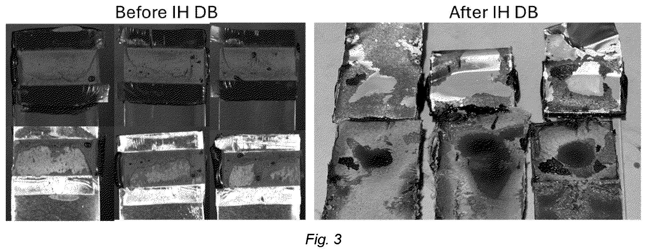

To characterize the debonding efficiency, the thermally debondable adhesive composition layer was triggered using the induction heating device EasyHeat 2.4 kW from Ambrell, equipped with a pancake coil. The power was set to 10.5% and there was not distance between the pancake and the specimens. The bonded structures were fully debonded after 25 seconds. Additionally, the failure mode before debonding was a cohesive failure in the adhesive, instead after debonding it was possible to observe an adhesive failure between the induction sensitive layer and the thermally debondable adhesive composition layer (Figure 2). Figure 3 illustrates bonded structures before and after the debonding.

## Claims

1. A bonded structure comprising:
a first plastic substrate;
a second plastic substrate;
a thermally debondable adhesive composition layer comprising thermally expandable thermoplastic microspheres;
a structural adhesive layer; and
an induction sensitive layer,
wherein the thermally debondable adhesive composition is disposed on a surface of the first plastic substrate and/or on a surface of the second plastic substrate and wherein the induction sensitive layer is placed on top of the thermally debondable adhesive composition layer.

2. The bonded structure according to claim 1, wherein the first plastic substrate is the same or different than the second plastic substrate and independently selected from the group consisting of polypropylene, polycarbonate, acrylonitrile butadiene styrene, mixture of polycarbonate and acrylonitrile butadiene styrene, polypropylene with glass fibre, polyamide, polypropylene with talc, and mixtures thereof, preferably the first plastic substrate is polypropylene.

3. The bonded structure according to claim 1 or 2, wherein the second plastic substrate is same or different than the first plastic substrate and independently selected from the group consisting of polypropylene, polycarbonate, acrylonitrile butadiene styrene, mixture of polycarbonate and acrylonitrile butadiene styrene, polypropylene with glass fibre, polyamide, polypropylene with talc, and mixtures thereof, preferably the second plastic substrate is polycarbonate.

4. The bonded structure according to any one of claims 1 to 3, wherein the thermally debondable adhesive composition layer comprising thermally expandable thermoplastic microspheres is selected from the group consisting of water based acrylic primer composition comprising thermally expandable thermoplastic microspheres, one component polyurea adhesive composition comprising thermally expandable thermoplastic microspheres, one component epoxy adhesive composition comprising thermally expandable thermoplastic microspheres, two component epoxy adhesive composition comprising thermally expandable thermoplastic microspheres, one component polyurethane adhesive composition comprising thermally expandable thermoplastic microspheres, hotmelt adhesive composition comprising thermally expandable thermoplastic microspheres, and mixtures thereof.

5. The bonded structure according to any one of claims 1 to 4, wherein the thermally expandable thermoplastic microspheres have a core-shell structure, and wherein the shell is formed from cross-linked polymer and the core is composed of a blowing agent.

6. The bonded structure according to any one of claims 1 to 5, wherein the thermally expandable thermoplastic microspheres have a particle size from 5 to 100 µm, preferably from 8 to 75 µm, preferably from 9 to 50 µm, more preferably from, 10 to 30 µm, more preferably from 12 to 20 µm, and even more preferably from 13 to 19 µm, wherein the particle size is measure by laser diffraction (Low Angle Laser Light Scattering LALLS).

7. The bonded structure according to any one of claims 1 to 6, wherein the thermally expandable thermoplastic microspheres expand when exposed to a heat, preferably exposed to a heat of from 60 to 200°C, preferably from 100 to 180 °C, and more preferably from 130 to 160°C.

8. The bonded structure according to any one of claim 1 to 7, wherein the thermally expandable thermoplastic microspheres are present in a primer composition from 8 to 50% by weight of the total weight of the primer composition, and wherein the thermally expandable thermoplastic microspheres are present in an adhesive composition from 10 to 50% by weight based on the total weight of the adhesive composition, preferably from 20 to 45% and more preferably from 24 to 40%.

9. The bonded structure according to any one of claims 1 to 8, wherein the structural adhesive layer is formed from an adhesive selected from the group consisting of one component epoxy adhesives, two component epoxy adhesives, acrylic adhesives, one component polyurethane adhesives, two component polyurethane adhesives, cyanoacrylate adhesives, silicone adhesives, polyimide adhesives, silane modified polymers, butyls, hotmelts and mixtures thereof.

10. The bonded structure according to any one of claims 1 to 9, wherein the induction sensitive layer is selected from the group consisting of a metal layer, a metal mesh, a metal wire, and mixtures thereof.

11. The bonded structure according to any one of claims 1 to 10, wherein the metal used in the induction sensitive layer is selected from the group consisting of iron, steel, nickel, cobalt, copper, brass, bronze, aluminium and mixtures thereof, preferably the metal is aluminium.

12. The bonded structure according to any one of claims 1 to 11, wherein the thickness of the induction sensitive layer is from 10 to 250 µm, preferably from 20 to 180 µm and more preferably from 30 to 100 µm.

13. Use of the bonded structure according to any one of claims 1 to 12 in vehicle parts.

14. A method of debonding the bonded structure according to any one of claims 1 to 12, the method comprising the steps of:
i) applying an induction heating; and,
ii) debonding the surfaces.

15. The method according to claim 14, wherein the temperature applied in step i) is preferably from 60 to 200°C, more preferably from 100 to 180 °C, and even more preferably from 130 to 160°C.

16. The method according to claim 14 or 15, wherein the induction heating is applied for a duration of from 7 seconds to 60 minutes.
